# FASCICULE DE BREVET EUROPEEN

(11) **EP 2 020 097 B1**
(45) Date de publication et mention de la délivrance du brevet: **28.01.2015**
(21) Numéro de dépôt: 07728696.1
(22) Date de dépôt: 02.05.2007
(51) Int. Cl.: H04W 72/00, H04W 36/00

(54) **DISPOSITIF ET PROCÉDÉ DE CONTRÔLE DE BANDES DE FRÉQUENCES FDD ET NON FDD**
EINRICHTUNG UND STEUERPROZEDUR FÜR FDD- UND NICHT-FDD-BANDBREITE
DEVICE AND CONTROL PROCEDURE FOR FDD AND NON-FDD BANDWIDTH

(30) Priorité: 02.05.2006 FR 0651561
(43) Date de publication de la demande: 04.02.2009
(73) Titulaire: ALCATEL LUCENT, 92100 Boulogne-Billancourt (FR); Orange, 75015 Paris (FR)
(72) Inventeur: BOURDEAUT, Stanislas, F-75015 Paris (FR); PONS, Jérome, F-75011 Paris (FR)
(74) Mandataire: Cabinet Plasseraud
(86) Numéro de dépôt international: PCT/EP2007/054242
(87) Numéro de publication internationale: WO 2007/125124

(56) Documents cités:
- EP-A- 0 975 184
- EP-A2- 1 207 636
- WO-A-2004/028174
- US-A1- 2006 018 279

## Description

L'invention concerne le domaine des réseaux de communication et plus particulièrement, les réseaux de communication radio, notamment les réseaux de communication radio mobile de type UMTS.

Plus précisément, l'invention concerne l'utilisation de bandes de fréquences par des terminaux d'utilisateurs en vue d'accéder à des services ne requérant pas de voie de retour comme par exemple les services de diffusion, offerts par de tels réseaux radio.

On entend ici par « service ne requérant pas de voie de retour » tout service unidirectionnel de type point-à-multipoints ou point-à-point, et notamment les services de diffusion, éventuellement de contenu(s) multimédia, comme par exemple et non limitativement le service de diffusion de type MBMS (« Multimedia Broadcast / Multicast Service »).

Il est rappelé que le service de diffusion MBMS est défini dans la version 6 (ou "Release 6") des spécifications 3GPP ("3rd Generation Partnership Project"), qui régit la transmission de données multimédia dans les réseaux mobiles (ou cellulaires) de type UMTS disposant, d'un réseau d'accès radio, par exemple de type UTRAN (pour « UMTS Terrestrial Radio Access Network ») ou de type évolution de l'UTRAN, et en particulier dans les spécifications techniques 3GPP TS 25.346 et 23.246 (notamment accessibles sur le site Internet du 3GPP à l'adresse « www.3gpp.org »).

Par ailleurs, on entend ici par « contenu multimédia » des fichiers de données (ou « data » en anglais), comme par exemple des fichiers audio ou des fichiers vidéos, ou des programmes de télévision, notamment.

Comme le sait l'homme de l'art, l'organisme 3GPP recommande deux modes de réseau d'accès radio pour les réseaux mobiles tels que l'UMTS.

Le document EP1207636 divulgue une station mobile recevant un signal basé sur un duplexage FDD comprenant des informations sur un signal basé sur un duplexage TDD. Cette station mobile peut gérer un changement de mode automatique entre un mode de duplexage FDD et un mode de duplexage TDD, notamment pour gérer la mobilité des terminaux.

Un premier mode est relatif aux réseaux d'accès radio dits FDD (pour « Frequency Division Duplex ») ou WCDMA (pour "Wideband Code Division Multiple Access"), c'est-à-dire ceux qui utilisent un duplexage en fréquences pour transmettre des données. Dans ce premier mode (FDD) le terminal mobile de l'utilisateur (ou terminal d'utilisateur) transmet des données au réseau d'accès radio sur une fréquence dédiée d'une liaison montante (ou « uplink »), tandis que le réseau d'accès radio transmet des données au terminal d'utilisateur sur une autre fréquence dédiée d'une liaison descendante (ou « downlink »). Ainsi, pour établir, par exemple, un appel voix classique, le terminal d'utilisateur et le réseau mobile transmettent simultanément des données sur les deux fréquences.

L'Union Internationale des Télécommunications (UIT) a attribué en 1992 des bandes de fréquences FDD spécifiques comprises entre 1920 MHz et 1980 MHz pour les liaisons montantes et entre 2110 MHz et 2170 MHz pour les liaisons descendantes, pour les réseaux UMTS FDD. Ces bandes sont divisées en blocs de fréquences de 5 MHz qui sont appairés entre les bandes « montantes » et « descendantes ».

Un second mode, que l'on décrit ici à titre d'exemple, est relatif aux réseaux d'accès radio dits TDD (pour « Time Division Duplex »), c'est-à-dire ceux qui utilisent un duplexage en temps pour transmettre des données. Dans ce second mode (TDD) le terminal d'utilisateur transmet des données au réseau d'accès radio sur une fréquence dédiée d'une liaison montante pendant un intervalle de temps donné, tandis que le réseau d'accès radio transmet des données au terminal d'utilisateur sur la même fréquence dédiée d'une liaison descendante mais sur un autre intervalle de temps. Ainsi, pour établir une communication classique, le terminal d'utilisateur et le réseau mobile transmettent « alternativement » des données sur la même fréquence.

L'Union Internationale des Télécommunications a également attribué en 1992 des bandes de fréquences TDD spécifiques comprises entre 1900 MHz et 1920 MHz et entre 2010 MHz et 2025 MHz pour les liaisons montantes et descendantes, pour les réseaux UMTS TDD. Ces bandes sont divisées en blocs de fréquences de 5 MHz qui ne sont pas appairés.

Les opérateurs UMTS qui jouissent de l'attribution de bandes de fréquences FDD, exploitent celles-ci à un point de saturation tel qu'il devient difficile, voire impossible, de les utiliser pour offrir de nouveaux services tels que le MBMS sans risquer de perturber d'autres services qui les utilisent déjà, comme par exemple les services de radiocommunication classiques. Cela est d'autant plus vrai lorsque le service de diffusion requiert une quantité importante de ressources radio, comme par exemple dans le cas de la télévision mobile qui nécessite un débit minimum de 256 kbps (kilobits par seconde) pour chaque canal de télévision pour un niveau de qualité de service optimal (ou un débit minimum de 128 kbps pour un niveau de qualité inférieur).

De plus, les bandes de fréquences FDD sont généralement partagées par plusieurs opérateurs, si bien qu'il leur est encore plus difficile d'offrir chacun de leur côté à leurs clients respectifs des services (éventuellement de diffusion) qui, comme indiqué précédemment, sont gros consommateurs de ressources radio.

Par ailleurs, les services de diffusion de données multimédia, comme par exemple MBMS, peuvent être utilisés sur tout type de réseau d'accès radio UMTS (TDD ou FDD). Ils comportent généralement deux modes de diffusion.

Un premier mode de diffusion appelé « broadcast » permet de diffuser les mêmes données multimédia dans toutes les cellules d'une zone de service, du réseau mobile de l'opérateur, associée à ces données multimédia. Tous les terminaux mobiles UMTS, conformes à la version 6 de l'UMTS (qui a introduit le MBMS) et se trouvant dans cette zone de service, peuvent alors recevoir les données multimédia diffusées.

Un second mode de diffusion appelé « multicast » permet de diffuser les mêmes données multimédia dans toutes les cellules d'une zone de service, du réseau mobile de l'opérateur, associée à ces données multimédia. Mais, contrairement au premier mode (broadcast), seuls peuvent recevoir les données multimédia diffusées les terminaux d'utilisateurs UMTS qui sont conformes à la version 6 de l'UMTS, qui se trouvent dans la zone de service et qui ont souscrit un abonnement leur permettant de recevoir de telles données multimédia.

Par conséquent, dans une cellule donnée du réseau mobile d'un opérateur, un contenu peut soit ne pas être diffusé lorsque cette cellule n'appartient pas à la zone de service associée à la diffusion du contenu (données multimédia), soit être diffusé à tous les terminaux d'utilisateurs situés dans ladite zone de service (en mode broadcast), soit encore n'être diffusé qu'à une partie des terminaux d'utilisateurs situés dans ladite zone de service (en mode multicast).

Lorsqu'un contenu (éventuellement multimédia) est diffusé dans une cellule, deux cas peuvent survenir. Le premier cas correspond généralement à une situation dans laquelle un faible nombre de terminaux d'utilisateurs reçoit le contenu. Dans ce premier cas, des canaux radio dédiés de type point-à-point (ou PTP, pour "Point To Point") sont établis entre le réseau d'accès radio de l'opérateur et chaque terminal d'utilisateur situé dans cette cellule et concerné par le contenu. Le second cas correspond généralement à une situation dans laquelle un nombre élevé de terminaux d'utilisateurs reçoit le contenu. Dans ce second cas, un canal radio partagé de type point-à-multipoints (ou PTM, pour "Point To Multipoints") est établi entre le réseau d'accès radio de l'opérateur et tous les terminaux d'utilisateurs situés dans cette cellule et concernés par le contenu.

Pour faciliter l'utilisation du canal radio partagé de type point-à-multipoints (second cas), les terminaux d'utilisateurs conformes à la version 6 de la norme UMTS ne font que recevoir sur une liaison descendante (ou « downlink ») les données (sous forme de signaux radio) qui sont associées au service MBMS et qui sont issues du réseau d'accès radio de l'opérateur. Ils ne transmettent donc aucune donnée (ou aucun signal radio) associée au service MBMS sur une liaison montante (ou « uplink »). La diffusion est alors dite sans voie de retour. Par conséquent, lorsque le réseau d'accès radio est de type FDD, la bande de fréquences FDD dédiée aux liaisons montantes FDD n'est pas utilisée par les terminaux d'utilisateurs pour le service MBMS, et lorsque le réseau d'accès radio est de type TDD, l'intervalle de temps dédié aux liaisons montantes TDD n'est pas utilisé par le terminal d'utilisateur pour le service MBMS.

Pour améliorer la situation, et pallier l'inconvénient de "sur-utilisation" des bandes de fréquences FDD, il serait possible d'équiper les terminaux d'utilisateurs et les équipements du réseau d'accès radio d'émetteurs/récepteurs hybrides, par exemple FDD/TDD. Mais, cela serait coûteux non seulement pour les équipementiers (constructeurs de réseaux d'accès radio et/ou de terminaux d'utilisateurs) mais également pour les opérateurs des réseaux mobiles. Une autre solution consisterait à faire déployer par un opérateur de réseau mobile deux réseaux d'accès radio, l'un opérant en mode FDD et l'autre opérant par exemple en mode TDD, et à proposer aux clients de cet opérateur d'acheter deux terminaux d'utilisateurs, l'un possédant un émetteur/récepteur opérant en mode FDD et l'autre possédant un émetteur/récepteur opérant en mode TDD, afin qu'ils puissent recevoir le contenu MBMS. Mais, cette solution est également onéreuse.

Aucune solution connue n'est donc entièrement satisfaisante.

L'invention permet d'améliorer la situation en proposant de transmettre certaines trames de données de type FDD sur des liaisons descendantes, d'un réseau d'accès radio de type FDD vers des terminaux d'utilisateurs équipés d'un émetteur/récepteur FDD, dans d'autres bandes de fréquences disponibles, comme par exemple dans une partie au moins des bandes de fréquences TDD (c'est-à-dire au moins un bloc de fréquences de 5 MHz, dans un exemple de réalisation).

Elle propose à cet effet un dispositif de contrôle de bandes de fréquences utilisées par un terminal d'utilisateur propre à être connecté à un réseau permettant de mettre à disposition de l'utilisateur un service ne nécessitant pas de voie de retour, le réseau étant un réseau à duplexage en fréquence (FDD), et disposant d'au moins un ensemble de blocs de fréquences d'un premier type, dédié à la transmission de trames de données, et d'un ensemble de blocs de fréquences d'un second type distinct du premier type, par exemple TDD. Ce dispositif comprend
- des moyens d'analyse d'au moins une information de signalisation reçue par le terminal utilisateur sur un bloc de fréquence du premier type, et
- des moyens de basculement aptes à être activés en cas de détection par les moyens d'analyse d'une information de signalisation signalant la mise à disposition d'un service sur un bloc de fréquences du second type, pour recevoir des trames de données du premier type sur le bloc de fréquences du second type.

Ainsi, le terminal d'utilisateur peut recevoir les données du service (éventuellement de diffusion) et des informations de signalisation, transmises par le réseau d'accès radio sous la forme de trames FDD, sur le bloc de fréquences du deuxième type.

Les moyens de basculement de ce dispositif peuvent être également chargés, avant le basculement sur le bloc de fréquences du second type, de proposer à l'utilisateur du terminal d'accéder au service, et de n'adresser un ordre de basculement au terminal d'utilisateur qu'en cas d'accord de l'utilisateur.

L'utilisateur peut ainsi refuser d'accéder au service de diffusion proposé sur le bloc de fréquences du second type.

Les moyens de basculement de ce dispositif peuvent également être chargés, en cas de détection sur le bloc de fréquences du second type d'une information de signalisation signalant une communication entrante sur le terminal d'utilisateur, de proposer à l'utilisateur de recevoir la communication entrante et, en cas d'accord de l'utilisateur, d'ordonner au terminal d'utilisateur de basculer sur le bloc de fréquences du premier type, de sorte qu'il puisse effectuer une demande d'établissement de connexion pour initier la communication entrante sur le bloc de fréquences du premier type

Par ailleurs, les moyens de basculement peuvent également être chargés, en cas de tentative d'établissement d'une communication sortante par le terminal d'utilisateur, d'ordonner au terminal d'utilisateur de basculer sur le bloc de fréquences du premier type, de sorte que le terminal d'utilisateur puisse effectuer une demande d'établissement de connexion pour initier la communication sortante sur le bloc de fréquences du premier type

Ainsi, l'utilisation du bloc de fréquence du second type est compatible avec la possibilité pour un terminal d'utilisateur de recevoir une communication ou émettre sur un bloc de fréquence du premier type.

L'invention propose également un terminal d'utilisateur comprenant un émetteur/récepteur à duplexage en fréquences propre à se connecter à un réseau de type précité et comprenant un dispositif de contrôle conforme à l'invention.

Ainsi, le terminal d'utilisateur peut recevoir les données multimédia associées au service (éventuellement de diffusion) et des informations de signalisation, transmises par le réseau d'accès radio sous la forme de trames FDD sur le bloc de fréquences du second type.

Le procédé selon l'invention peut comporter d'autres caractéristiques qui peuvent être prises séparément ou en combinaison, et notamment : - avant d'ordonner le basculement sur le bloc de fréquences du second type, on propose à l'utilisateur du terminal d'utilisateur d'accéder au service mis à disposition sur le bloc de fréquences du second type, et le terminal d'utilisateur ne procède au basculement qu'en cas d'accord de son utilisateur.
- en cas de détection sur le bloc de fréquences du second type d'une information de signalisation signalant une communication entrante sur le terminal d'utilisateur, on propose à l'utilisateur de recevoir la communication entrante, et en cas d'accord de l'utilisateur, le terminal d'utilisateur bascule sur le bloc de fréquences du premier type, afin de pouvoir effectuer une demande d'établissement de connexion pour initier la communication entrante sur le bloc de fréquences du premier type
- en cas de tentative d'établissement d'une communication sortante par le terminal d'utilisateur sur une liaison montante, le terminal d'utilisateur bascule sur le bloc de fréquences du premier type, afin de pouvoir effectuer une demande d'établissement de connexion pour initier la communication sortante sur le bloc de fréquences du premier type.
- le réseau transmet à plusieurs terminaux d'utilisateurs, sur un bloc de fréquences du premier type, des messages de signalisation contenant des informations de signalisation signalant la mise à disposition d'un service sur un bloc de fréquences du second type, puis le réseau transmet aux terminaux d'utilisateurs sur le bloc de fréquences du second type les trames de données contenant les données du service et des informations de signalisation.

L'invention est particulièrement bien adaptée, bien que de façon non exclusive, aux services de diffusion de type MBMS.

D'autres caractéristiques et avantages de l'invention apparaîtront à l'examen de la description détaillée ci-après, et des dessins annexés, sur lesquels :
- la figure 1 illustre de façon très schématique et fonctionnelle l'architecture générale d'un réseau de communication mobile, comprenant un réseau d'accès radio muni d'un contrôleur de stations de base selon l'invention et de stations de base selon l'invention, et auquel sont connectés des terminaux d'utilisateurs équipés chacun d'un dispositif selon l'invention, et
- la figure 2 illustre de façon schématique un exemple d'utilisation de bandes de fréquences TDD et FDD selon l'invention.

Les dessins annexés pourront non seulement servir à compléter l'invention, mais aussi contribuer à sa définition, le cas échéant.

Dans l'exemple de réalisation décrit ci-après, l'invention permet de transmettre des trames de données de type FDD, comportant des données multimédia associées à un service (éventuellement de diffusion), d'un réseau d'accès radio opérant en mode FDD appartenant à un réseau mobile UMTS, vers des terminaux d'utilisateurs équipés d'un émetteur/récepteur UMTS FDD, dans d'autres bandes de fréquences disponibles que celles de type FDD, comme par exemple une partie au moins des bandes de fréquences de type TDD ou d'autres bandes telles que les bandes de fréquences satellite MSS (« Mobile Satellite Service ») ou les bandes de fréquence allouées au GSM.

Dans ce qui suit, on considère à titre d'exemple non limitatif que les cellules font partie d'un réseau d'accès radio de type UTRAN FDD d'un réseau de communication de type UMTS (pour « Universal Mobile Telecommunications System ») offrant des services de diffusion de contenus multimédia de type MBMS (ci-après appelés services MBMS).

Mais, l'invention n'est pas limitée à ce type de réseau d'accès radio. Elle concerne en effet tout réseau d'accès radio de type UTRAN FDD ou constituant une évolution de l'UTRAN, ainsi que les réseaux d'accès radio satellitaires ou hybrides (terrestre et satellitaire). Par ailleurs, l'invention n'est pas limitée aux seuls services de diffusion de type MBMS. Elle concerne d'une manière générale tous les services, éventuellement de diffusion, multimédia ou non, dits « sans voie de retour » du fait qu'ils ne nécessitent pas d'acquittement. En outre l'invention n'est pas limitée aux seuls réseaux UMTS.

Par ailleurs, on considère dans ce qui suit que la bande de fréquences non FDD que l'on utilise pour la diffusion de données multimédia est la bande de fréquences TDD. Mais, l'invention ne se limite pas à cette bande de fréquences TDD. Elle concerne en effet toute bande de fréquences (appairée ou non) offrant des blocs de fréquences de 5 MHz, utilisables dans le cadre de l'UMTS (dans l'exemple décrit).

Il est important de noter que les services de diffusion (ici de type MBMS) peuvent varier d'une cellule à l'autre ou d'un groupe de cellules à l'autre. En effet, deux services de diffusion peuvent être délivrés dans deux zones de service composées de cellules communes ou différentes.

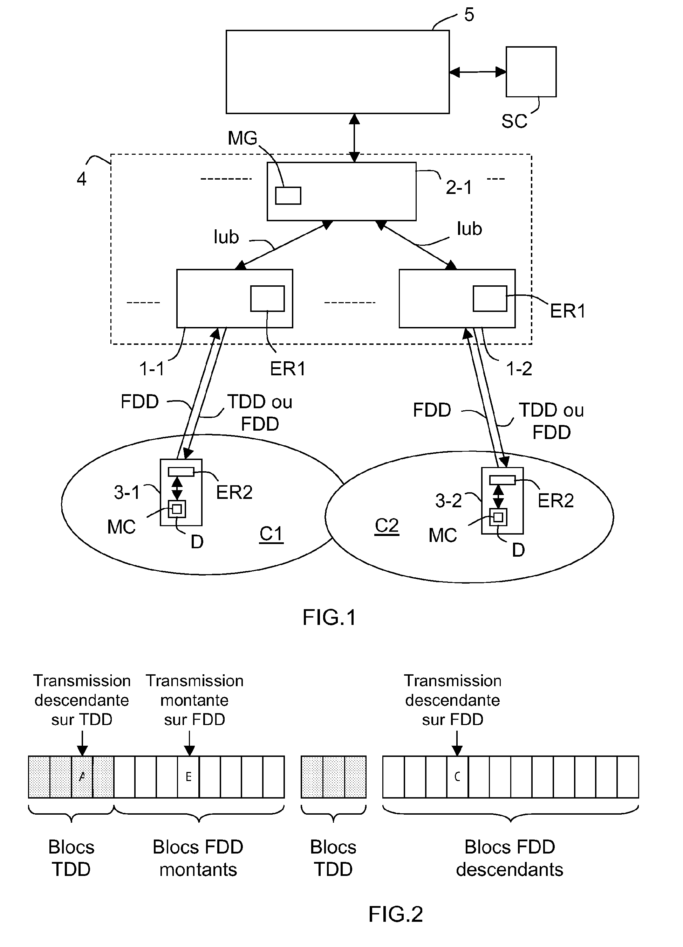

On se réfère tout d'abord à la figure 1 pour décrire, de façon très schématique, mais néanmoins suffisante à la compréhension de l'invention, un exemple de réseau (de communication) mobile de type UMTS dans lequel peut être mise en oeuvre l'invention.

Le réseau mobile comprend un réseau d'accès radio 4 (ou UTRAN) de type FDD, connecté à un coeur de réseau 5 (ou « core network »). Le réseau d'accès radio 4 comprend des stations de base 1-i, appelées « Node B » dans le cas de l'UMTS, et des contrôleurs de stations de base 2-k, appelés « RNC » (pour « Radio Network Controller ») dans le cas de l'UMTS.

Dans l'exemple non limitatif illustré sur la figure 1, seules deux stations de base 1-1 et 1-2 (i = 1 ou 2) et un contrôleur de stations de base 2-k (k = 1) ont été représentés. Mais, les indices i et k peuvent prendre n'importe quelle valeur supérieure ou égale à un (1).

Les stations de base 1-i sont principalement des émetteurs/récepteurs associés chacun à au moins une zone de couverture (composée d'une cellule Ci ou d'un groupe de cellules) dans laquelle des communications radio peuvent être établies avec des terminaux d'utilisateurs 3-j qui s'y trouvent situés. Ils comprennent chacun, par conséquent, au moins un module d'émission/réception ER1 de type FDD. Les contrôleurs de stations de base 2-k sont en charge du contrôle du réseau d'accès radio et des actions effectuées par les différents terminaux d'utilisateurs 3-j.

Les terminaux d'utilisateurs 3-j (ou UE, pour « User Equipment ») sont des terminaux mobiles. Dans l'exemple non limitatif illustré sur la figure 1, seuls deux terminaux d'utilisateurs 3-1 et 3-2 (j = 1 ou 2) ont été représentés. Mais, l'indice j peut prendre n'importe quelle valeur supérieure ou égale à un (1).

Les terminaux d'utilisateurs 3-j sont des terminaux de communication capables d'échanger par voie d'ondes avec le réseau d'accès radio 4 des trames de données de type FDD, grâce à un émetteur/récepteur ER2 de type FDD. Il s'agit, par exemple, de terminaux mobiles tels que des téléphones mobiles. Mais, il pourrait s'agir de terminaux de communication d'autres types, comme par exemple des ordinateurs portables équipés d'un émetteur/récepteur ER2 (dans la pratique, il peut s'agir de cartes PCM/CIA UMTS) ou des assistants numériques personnels (ou PDAs) équipés d'un émetteur/récepteur ER2. Dans ce qui suit, on considère, à titre d'exemple illustratif et non limitatif, que les terminaux d'utilisateurs 3-j sont des téléphones mobiles.

L'invention propose notamment d'implanter un dispositif de contrôle D dans certains au moins des terminaux d'utilisateurs 3-j (ici des téléphones mobiles) afin de contrôler l'utilisation des bandes de fréquences FDD et de blocs de fréquences d'un type différent de FDD (ici celles de type TDD à titre d'exemple).

Il est rappelé que les bandes de fréquences FDD et TDD sont subdivisées en blocs de fréquences de 5 MHz. Dans ce qui suit, on considère que les blocs de fréquences FDD dédiés aux liaisons montantes FDD constituent un premier ensemble d'un premier type, les blocs de fréquences FDD dédiés aux liaisons descendantes FDD constituent un deuxième ensemble d'un premier type, et les blocs de fréquences TDD dédiés aux liaisons montantes et descendantes TDD constituent un troisième ensemble d'un second type. On notera que plusieurs ensembles ou parties d'ensembles de fréquences de type non FDD peuvent être utilisés.

Un dispositif de contrôle D, selon l'invention, comprend un module d'analyse et un module de basculement. Dans l'exemple non limitatif illustré sur la figure 1, le module d'analyse et le module de basculement constituent deux sous-parties d'un même module référencé MC (ils sont donc ci-après tous les deux référencés MC). Mais, ils pourraient constituer deux modules séparés.

Le module d'analyse MC est activé, et donc chargé d'intervenir, chaque fois que le téléphone mobile 3-j dans lequel il est implanté a établi avec le réseau d'accès radio 4 une communication (c'est-à-dire un appel en mode circuit ou une session en mode paquet). On entend ici par « communication » le fait d'avoir établi entre le téléphone mobile 3-j et le réseau d'accès radio 4, d'une part, une liaison montante sur un bloc de fréquences FDD du premier ensemble (et donc d'un premier type), et d'autre part, une liaison descendante sur un bloc de fréquences FDD du deuxième ensemble (et donc du premier type).

Chaque fois qu'une telle communication est établie, le module d'analyse analyse certains au moins des messages de signalisation, qui sont reçus par le téléphone mobile 3-j auquel il appartient, sur la liaison descendante établie. Il est rappelé que les messages de signalisation comportent, entre autres, des informations de signalisation du réseau d'accès radio, appelées « informations pilotes » et/ou des informations dites « de paging », et/ou des informations relatives à la diffusion d'un contenu propre à un service (par exemple MBMS). Cette analyse est destinée à détecter la présence d'informations de signalisation signalant la mise à disposition par le réseau d'accès radio 4 d'un service de diffusion sur un bloc de fréquences TDD donné.

En effet, selon l'invention, les contrôleurs de stations de base 2-k sont équipés d'un module de gestion MG chargé de générer, en fonction d'instructions fournies par le coeur de réseau 5 et/ou un centre de gestion et de maintenance de type OMC (pour « Operation and Maintenance Centre »), faisant partie d'un système de gestion de réseau ou NMS (pour « Network Management System ») du réseau mobile UMTS, des informations de signalisation signalant la mise à disposition d'un service de diffusion sur un bloc de fréquences TDD donné du troisième ensemble. Ces informations sont ensuite intégrées par le contrôleur de stations de base 2-k concerné dans des messages de signalisation afin d'être transmises à des téléphones mobiles 3-j en mode point-à-multipoints et sur un bloc de fréquences FDD donné du deuxième ensemble.

Lorsque le service de diffusion est de type MBMS, les messages de signalisation, qui comprennent les informations qui le concernent, sont transmis aux téléphones mobiles 3-j par les stations de base 1-i sur un canal de diffusion appelé BCH (pour « Broadcast CHannel »), tout comme les informations pilotes (entre autres). Il est rappelé que ce canal BCH véhicule un canal logique appelé BCCH (pour « Broadcast Control CHannel ») qui fournit aux téléphones mobiles 3-j les indications pour accéder à un canal de transport appelé MCCH (pour « MBMS Control CHannel ») propre au service MBMS, comme le prévoit la version 6 de la norme MBMS.

Il est rappelé que les informations de signalisation relatives à un service de diffusion comprennent notamment des informations de configuration destinées à permettre aux téléphones mobiles 3-j de se configurer de manière à être capables de surveiller un canal de trafic sur lequel sont transmises les données du contenu que ledit service diffuse. D'après la version 6 de la norme UMTS, en mode point-à-multipoints, les données multimédia associées au service MBMS sont diffusées sur un canal de transport appelé MTCH (pour "MBMS Traffic CHannel"). La configuration du canal MTCH est connue du téléphone mobile 3-j grâce aux informations contenues dans le canal de transport MCCH.

Parmi ces informations de configuration, on peut notamment citer la liste des zones de service(s) pour lesquelles chaque service (MBMS) ou groupe de services (MBMS) doit être diffusé, les informations de programmation de chaque service (MBMS) ou groupe de services (MBMS), la qualité de service (QoS) requise pour chaque service (MBMS) ou groupe de services (MBMS), et la configuration du canal de trafic (MTCH) utilisé par le service (MBMS).

Afin que le module d'analyse d'un téléphone mobile 3-j puisse détecter des informations concernant un service de diffusion, il faut donc qu'il observe les messages de signalisation qui sont transmis dans le canal descendant BCH sur un bloc de fréquences FDD donné du deuxième ensemble. De préférence, le module d'analyse MC observe également les messages qui sont transmis par le réseau d'accès radio 4 dans le canal de transport descendant de type PCH (pour « Paging CHannel ») dans le cas où le téléphone mobile 3-j recevrait, par exemple, un appel entrant.

Une fois que les téléphones mobiles 3-j ont été avertis (sur le canal BCH) de la mise à disposition d'un service de diffusion sur un bloc de fréquences TDD donné, le contrôleur de stations de base 2-k peut procéder à la diffusion des données multimédia, sous la forme de trames de données de type FDD, dans la bande de fréquences TDD.

Il est important de noter que la diffusion de données multimédia de type MBMS se fait soit en mode point-à-point, soit en mode point-à-multipoints. Le mode point-à-point est généralement utilisé lorsque le nombre de téléphones mobiles 3-j (destinataires d'un contenu à diffuser) est faible. Dans ce cas, des canaux radio dédiés de type point-à-point (ou PTP) sont établis entre le réseau d'accès radio 4 et chaque téléphone mobile 3-j destinataire du contenu à diffuser. Chaque canal radio dédié est transmis sur une fréquence FDD d'un bloc du deuxième ensemble (signalée dans un message de signalisation). Le mode point-à-multipoints est généralement utilisé lorsque le nombre de téléphones mobiles 3-j (destinataires d'un contenu à diffuser) est important. Dans ce cas, un canal radio MBMS partagé de type point-à-multipoints (ou PTM) est établi entre le réseau d'accès radio 4 et tous les téléphones mobiles 3-j destinataires du contenu à diffuser. Ce canal radio MBMS partagé est transmis sur une fréquence TDD du bloc de fréquences TDD donné du troisième ensemble (signalée dans un message de signalisation).

Pour permettre, la transmission des trames de données des services MBMS, les modules d'émission/réception ER1 des stations de base 1-i (du réseau d'accès radio 4) doivent être adaptés de manière à pouvoir utiliser sur les liaisons descendantes non seulement les fréquences des blocs de fréquences FDD habituels du deuxième ensemble, mais également les fréquences de certains au moins des blocs de fréquences TDD du troisième ensemble. Chaque station de base 1-i accorde alors l'émission de son module d'émission/réception ER1 soit sur des fréquences FDD, soit sur des fréquences TDD, en fonction d'instructions fournies par le contrôleur de stations de base 2-k qui la contrôle.

Lorsqu'un module d'analyse MC d'un téléphone mobile 3-j détecte des informations de signalisation signalant la mise à disposition d'un service de diffusion sur un bloc de fréquences TDD donné (et donc d'un second type), il active le module de basculement MC. Ce dernier peut alors par exemple proposer à l'utilisateur d'accéder à ce service de diffusion, par exemple en ordonnant l'affichage d'un message dédié sur l'écran de son téléphone mobile 3-j. Si l'utilisateur signale qu'il est d'accord, le module de basculement MC ordonne au téléphone mobile 3-j, auquel il appartient, de basculer la liaison descendante sur le bloc de fréquences TDD donné. Le téléphone mobile 3-j remplace alors l'ancien accordage de son émetteur/récepteur ER2 (sur une fréquence FDD du deuxième ensemble) par un nouvel accordage sur une fréquence TDD du bloc de fréquences TDD donné. Le téléphone mobile 3-j peut alors recevoir les données du service de diffusion et des informations de signalisation, transmises par le réseau d'accès radio 4 sous la forme de trames FDD en mode point-à-multipoints sur la nouvelle fréquence d'accordage du bloc de fréquences TDD donné.

On notera que si le module d'analyse MC d'un téléphone mobile 3-j détecte des informations de signalisation signalant la mise à disposition d'un service de diffusion en mode point-à-point sur un canal radio dédié et sur un bloc de fréquences FDD donné, il active également le module de basculement MC. Ce dernier peut alors par exemple proposer à l'utilisateur d'accéder à ce service de diffusion, par exemple en ordonnant l'affichage d'un message dédié sur l'écran de son téléphone mobile 3-j. Si l'utilisateur signale qu'il est d'accord, le module de basculement MC ordonne à son téléphone mobile 3-j de basculer la liaison descendante sur le bloc de fréquences FDD donné. Le téléphone mobile 3-j remplace alors l'ancien accordage de son émetteur/récepteur ER2 (sur une fréquence FDD du deuxième ensemble) par un nouvel accordage sur une fréquence FDD du bloc de fréquences FDD donné (de ce même deuxième ensemble). Le téléphone mobile 3-j peut alors recevoir les données du service de diffusion et des informations de signalisation, transmises par le réseau d'accès radio 4 sous la forme de trames FDD en mode point-à-point sur la nouvelle fréquence d'accordage du bloc de fréquences FDD donné. Le cas décrit ci-avant correspond à ce qui est appelé "Frequency Layer Convergence" dans la version 6 de la norme UMTS. Il consiste plus précisément à recevoir le contenu MBMS sur une fréquence FDD dédiée à la diffusion. Cette fréquence utilise des cellules dédiées. Lorsqu'un service MBMS est disponible deux cas sont à envisager : soit il y a peu d'utilisateurs à faire converger vers cette fréquence dédiée (et les cellules associées) et le service est délivré en mode PTP, soit il y a beaucoup d'utilisateurs à faire converger vers cette fréquence dédiée (et les cellules associées) et le service est délivré en mode PTM.

Dans le cas d'un service MBMS, les données multimédia associées au service de diffusion constituent un contenu multimédia, comme par exemple un fichier de données (ou « data » en anglais) textuel, imagé, audio ou vidéo (notamment des programmes de télévision), ou encore toute combinaison des contenus précités à titre d'exemples. Ces données de contenu sont fournies par un serveur de contenu SC qui est connecté au coeur de réseau 5, et plus précisément à un noeud GGSN (pour « Gateway GPRS Support Node ») qu'il comprend. Dans la version 6 de la norme UMTS, et dans le cadre du MBMS, le serveur de contenu est appelé BM-SC (pour "Broadcast / Multicast Service Center").

Il est rappelé que le coeur de réseau 5 comprend au moins un noeud SGSN (pour « Serving GPRS Support Node »), raccordé notamment à des contrôleurs de stations de base 2-k, et au moins un noeud GGSN connecté au noeud SGSN et assurant la connexion du coeur de réseau 5 à au moins un serveur de contenus SC offrant des services de diffusion de contenus, par exemple de type MBMS.

On notera que les données de contenu peuvent être éventuellement comprimées soit par le serveur de contenus SC, soit par le contrôleur de stations de base 2-k.

Le module d'analyse MC d'un dispositif D peut également intervenir lorsqu'il détecte l'arrivée dans le téléphone mobile 3-j auquel il appartient, sur le bloc de fréquences TDD donné, d'informations de signalisation signalant une communication entrante, comme par exemple un appel entrant (ou un message de type SMS, MMS, ou autre). Il est rappelé que les appels entrants sont signalés par des messages dits « de paging » qui sont transmis sur un canal de transport appelé PCH (pour « Paging CHannel »). Afin que le module d'analyse MC d'un téléphone mobile 3-j puisse détecter des messages de paging, il faut qu'il observe le canal descendant PCH sur le bloc de fréquences TDD donné du troisième ensemble. En cas de détection d'un appel entrant, le module d'analyse MC active le module de basculement MC. Ce dernier peut alors par exemple proposer à l'utilisateur du téléphone mobile 3-j de recevoir cet appel entrant, par exemple en ordonnant l'affichage d'un message dédié sur l'écran de son téléphone mobile 3-j. Si l'utilisateur signale qu'il est d'accord, le module de basculement MC ordonne au téléphone mobile 3-j de basculer la liaison descendante sur le bloc de fréquences FDD donné du deuxième ensemble (utilisé avant le basculement sur le bloc de fréquences TDD donné afin de recevoir les données de contenu du service MBMS), afin de recevoir la communication entrante, par exemple l'appel entrant.

Le téléphone mobile 3-j remplace alors l'ancien accordage de son émetteur/récepteur ER2 (sur une fréquence TDD du troisième ensemble) par un nouvel accordage sur une fréquence FDD du bloc de fréquences FDD donné (du deuxième ensemble). Le téléphone mobile 3-j peut alors effectuer, auprès du réseau d'accès radio 4, une demande d'établissement de connexion pour recevoir l'appel entrant sur le bloc de fréquences FDD du deuxième ensemble. Cette demande se fait sur un canal de transport montant appelé RACH (pour « Random Access CHannel »). Le téléphone mobile 3-j peut alors recevoir les données des services paquets ou circuits classiques (telles que celles d'un appel téléphonique), mais il n'est plus en mesure de recevoir les données du contenu diffusé sur le bloc de fréquences TDD.

Par ailleurs, le module d'analyse MC d'un dispositif D peut également intervenir lorsque son téléphone mobile 3-j souhaite initier, à la demande de l'utilisateur dudit téléphone mobile, une communication sortante, comme par exemple un appel sortant ou l'envoi d'un SMS ou l'ouverture d'une session d'Internet, sur la liaison montante sur le bloc de fréquences FDD du premier ensemble. Dans ce cas, le module d'analyse MC active le module de basculement MC. Ce dernier ordonne alors au téléphone mobile 3-j auquel il appartient de basculer la liaison descendante sur le bloc de fréquences FDD donné du deuxième ensemble, afin que le réseau d'accès radio 4 puisse effectuer une demande d'établissement de connexion pour initier (puis recevoir) la communication sortante sur le bloc de fréquences FDD donné du deuxième ensemble (utilisé avant le basculement sur le bloc de fréquences TDD donné afin de recevoir les données de contenu du service MBMS). Cette procédure est en effet rendue nécessaire du fait que la communication téléphonique, ayant fait l'objet de la communication sortante et nécessitant une voie de retour montante, doit obligatoirement se faire sur les fréquences FDD étant donné qu'elles offrent à la fois les voies montante et descendante alors que le bloc de fréquences TDD n'offre qu'une voie descendante. Le téléphone mobile 3-j effectue sa demande d'établissement de connexion sur le canal de transport RACH. Le téléphone mobile 3-j, une fois la connexion établie, peut alors transmettre et recevoir les données de services paquets ou circuits classiques (telles que celles d'un appel téléphonique), mais il n'est plus en mesure de recevoir les données du contenu diffusé sur la fréquence TDD.

On va maintenant décrire un exemple de contrôle selon l'invention des fréquences FDD (premier type) et TDD (second type dans cet exemple) utilisées par un téléphone mobile 3-j, sous la forme d'étapes d'un procédé et en référence à la figure 2.

Le procédé débute lorsqu'un téléphone mobile 3-j (de type FDD) établit une connexion UMTS sur les bandes de fréquences FDD (avec son émetteur/récepteur FDD ER2). La connexion est établie avec un lien montant vers le réseau d'accès radio 4, par exemple sur le bloc de fréquences FDD référencé B du premier ensemble, et un lien descendant vers le téléphone mobile 3-j, par exemple sur le bloc de fréquences FDD référencé C du deuxième ensemble.

Lorsqu'un service de diffusion sans voie de retour (par exemple MBMS) est disponible, il l'est dans la bande de fréquences TDD, par exemple sur le bloc de fréquences TDD référencé A du troisième ensemble. Le réseau d'accès radio 4 utilise alors le bloc de fréquences FDD C pour notifier au téléphone mobile 3-j de basculer, si son utilisateur le souhaite, sur le bloc de fréquences TDD A afin de recevoir le service MBMS.

Le terminal mobile FDD bascule donc du bloc de fréquences FDD C vers le bloc de fréquences TDD A afin de recevoir le service MBMS en mode point-à-multipoints, diffusé par le réseau d'accès radio 4 sous forme de trames FDD descendantes sur la bande de fréquences TDD (sans trame FDD montante associée).

L'émetteur/récepteur FDD ER2 du téléphone mobile 3-j est bien entendu censé être capable de lire la trame FDD descendante sur la bande de fréquences TDD. Le téléphone mobile 3-j n'écoute alors plus la bande de fréquences FDD descendante (bloc de fréquences FDD C) mais écoute seulement la bande de fréquences TDD (bloc de fréquences TDD A) pour recevoir le service MBMS ainsi que les informations de paging.

Si le téléphone mobile 3-j doit recevoir un appel entrant, il en est averti par un message de paging sur la bande de fréquences TDD (bloc de fréquences TDD A). Le téléphone mobile 3-j repasse alors sur la bande de fréquences FDD (bloc de fréquences FDD C), si son utilisateur souhaite recevoir l'appel entrant, puis il réalise sa demande d'établissement de connexion pour recevoir l'appel entrant sur la bande de fréquences FDD montante (bloc de fréquences FDD B).

Si le téléphone mobile 3-j effectue un appel sortant alors qu'il est accordé sur la bande de fréquences TDD (bloc de fréquences TDD A), il repasse sur la bande de fréquences FDD (bloc de fréquences FDD C) afin de permettre au téléphone mobile 3-j d'effectuer sa demande d'établissement de connexion. Il est rappelé que dans le cas d'un appel entrant, le message de paging correspondant est envoyé du réseau d'accès radio 4 vers le téléphone mobile 3-j, et qu'ensuite le téléphone mobile 3-j initie sa demande de connexion. Dans le cas d'un appel sortant, le téléphone mobile 3-j initie directement la demande de connexion.

Le dispositif de contrôle D selon l'invention, et notamment ses modules d'analyse et de basculement MC, et le module de gestion MG des contrôleurs de stations de base 2-k peuvent être réalisés sous la forme de modules logiciels (ou informatiques), de circuits électroniques, ou d'une combinaison de circuits et de logiciels.

L'invention ne se limite pas aux modes de réalisation de dispositif de contrôle, de terminal d'utilisateur (ou terminal mobile), de contrôleur de stations de base, de station de base et de procédé de contrôle décrits ci-avant, seulement à titre d'exemple, mais elle englobe toutes les variantes que pourra envisager l'homme de l'art dans le cadre des revendications ci-après.

## Revendications

1. Dispositif, D, de contrôle de bandes de fréquences utilisées par un terminal d'utilisateur (3-j) propre à être connecté à un réseau permettant de mettre à disposition de l'utilisateur un service ne nécessitant pas de voie de retour, ledit réseau étant un réseau à duplexage en fréquence, FDD, et disposant d'au moins un ensemble de blocs de fréquences d'un premier type à duplexage en fréquence, dédié à la transmission de trames de données, et d'un ensemble de blocs de fréquences d'un second type à duplexage dans le temps, ledit dispositif de contrôle, D, étant implanté dans ledit terminal utilisateur, le dispositif comprenant
i) des moyens d'analyse d'au moins une information de signalisation reçue par ledit terminal utilisateur sur un bloc de fréquence du premier type, lesdits moyens étant adaptés pour détecter si ladite information de signalisation signale la mise à disposition dudit service sur un bloc de fréquences du second type, et
**caractérisé en ce qu'**il comprend
ii) des moyens de basculement aptes à être activés pour recevoir des trames de données du premier type sur le bloc de fréquences du second type en cas :
- de détection par lesdits moyens d'analyse de l'information de signalisation signalant la mise à disposition dudit service, et
- d'accord de l'utilisateur dudit terminal utilisateur (3-j) pour accéder audit service.

2. Dispositif selon la revendication 1, **caractérisé en ce que** lesdits moyens de basculement, MC, sont agencés pour :
- en cas de détection sur ledit bloc de fréquences du second type d'une information de signalisation signalant une communication entrante sur ledit terminal d'utilisateur (3-j), proposer audit utilisateur de recevoir ladite communication entrante et,
- en cas d'accord dudit utilisateur, ordonner audit terminal d'utilisateur (3-j) de basculer sur ledit bloc de fréquences du premier type, de sorte qu'il puisse effectuer une demande d'établissement de connexion pour initier ladite communication entrante sur ledit bloc de fréquences du premier type.

3. Dispositif selon l'une des revendications 1 à 2, **caractérisé en ce que** lesdits moyens de basculement, MC, sont agencés pour, en cas de tentative d'établissement d'une communication sortante par ledit terminal d'utilisateur (3-j), ordonner audit terminal d'utilisateur (3-j) de basculer sur ledit bloc de fréquences du premier type, de sorte que ledit terminal d'utilisateur (3-j) puisse effectuer une demande d'établissement de connexion pour initier ladite communication sortante sur ledit bloc de fréquences du premier type.

4. Terminal d'utilisateur (3-j), comprenant un émetteur/récepteur à duplexage en fréquences, ER2, propre à se connecter à un réseau permettant de mettre à disposition de l'utilisateur un service ne nécessitant pas de voie de retour, ledit réseau étant un réseau à duplexage en fréquence, et disposant d'au moins un ensemble de blocs de fréquences d'un premier type à duplexage en fréquence dédié à la transmission de trames de données, et d'un ensemble de blocs de fréquences d'un second type à duplexage dans le temps, **caractérisé en ce qu'**il comprend un dispositif de contrôle (D) selon l'une des revendications précédentes.

5. Procédé de contrôle de bandes de fréquences utilisées par des terminaux d'utilisateurs (3-j) propres à être connectés à un réseau permettant de mettre à disposition de l'utilisateur un service ne nécessitant pas de voie de retour, ledit réseau étant un réseau à duplexage en fréquences, et disposant d'au moins un ensemble de blocs de fréquences d'un premier type à duplexage en fréquence dédié à la transmission de trames de données, et d'un ensemble de blocs de fréquences d'un second type à duplexage dans le temps dans un dispositif de contrôle implanté dans ledit terminal utilisateur consistant :
i) à analyser au moins une information de signalisation reçue par ledit terminal d'utilisateur (3-j) sur un bloc de fréquences du premier type, lesdits moyens étant adaptés pour détecter si ladite information de signalisation signale la mise à disposition dudit service sur un bloc de fréquences du second type, et
**caractérisé en ce qu'**il consiste
ii) à ordonner audit terminal d'utilisateur de basculer sur un bloc de fréquences du second type pour recevoir des trames de données du premier type sur le bloc de fréquences du second type en cas de :
- détection de l'information de signalisation signalant la mise à disposition dudit service sur ledit bloc de fréquence du second type, et
- d'accord de l'utilisateur dudit terminal d'utilisateur (3-j) pour accéder audit service.

6. Procédé selon la revendication 5, **caractérisé en ce qu'**en cas de détection sur ledit bloc de fréquences du second type d'une information de signalisation signalant une communication entrante sur ledit terminal d'utilisateur (3-j), on propose audit utilisateur de recevoir ladite communication entrante, et en cas d'accord dudit utilisateur, ledit terminal d'utilisateur (3-j) bascule sur ledit bloc de fréquences du premier type, afin de pouvoir effectuer une demande d'établissement de connexion pour initier ladite communication entrante sur ledit bloc de fréquences du premier type.

7. Procédé selon l'une des revendications 5 à 6, **caractérisé en ce que**, en cas de tentative d'établissement d'une communication sortante par ledit terminal d'utilisateur (3-j) sur une liaison montante, ledit terminal d'utilisateur (3-j) bascule sur ledit bloc de fréquences du premier type, afin de pouvoir effectuer une demande d'établissement de connexion pour initier ladite communication sortante sur ledit bloc de fréquences du premier type.

8. Procédé selon l'une des revendications 5 à 7, **caractérisé en ce que** ledit réseau transmet à plusieurs terminaux d'utilisateurs (3-j), sur un bloc de fréquences du premier type, des messages de signalisation contenant des informations de signalisation signalant la mise à disposition d'un service sur un bloc de fréquences du second type, puis ledit réseau transmet auxdits terminaux d'utilisateurs (3-j) sur ledit bloc de fréquences du second type les trames de données contenant les données dudit service et des informations de signalisation.

9. Procédé selon l'une quelconque des revendications 5 à 8, **caractérisé en ce que** le service est un service de diffusion de type Service Multimedia Broadcast Multicast, MBMS.

## Patentansprüche

1. Steuerungsvorrichtung (D) zur Steuerung von Frequenzbändern, die von einem Benutzer-Endgerät (3-j) verwendet werden, das mit einem Netz verbunden werden kann, das erlaubt, dem Benutzer einen Dienst bereitzustellen, der keinen Rückkanal benötigt, wobei das Netz ein Frequenzduplex-Netz, FDD, ist und über mindestens eine für die Übertragung von Datenrahmen spezifizierte Gruppe von Frequenzblöcken eines ersten Frequenzduplex-Typs und über eine Gruppe von Frequenzblöcken eines zweiten Zeitduplex-Typs verfügt, wobei die Steuerungsvorrichtung, D, in dem Benutzer-Endgerät eingebaut ist und aufweist:
i) Analysemittel zur Analyse mindestens einer an einem Frequenzblock des ersten Typs von dem Benutzer-Endgerät empfangenen Signalisierungsinformation, wobei die Analysemittel konfiguriert sind, um zu detektieren, ob die Signalisierungsinformation die Bereitstellung des Dienstes an einem Frequenzblock des zweiten Typs signalisiert, und
**dadurch gekennzeichnet, dass** die Vorrichtung aufweist:
ii) Umschaltungsmittel, die in dem Fall dass
- die Analysemittel Signalisierungsinformation detektieren, die die Bereitstellung des Dienstes signalisiert, und
- der Benutzer des Benutzer-Endgeräts (3-j) seine Zustimmung zum Zugriff auf den Dienst erteilt,
aktiviert werden können, um Datenrahmen des ersten Typs an dem Frequenzblock des zweiten Typs zu empfangen.

2. Vorrichtung nach Anspruch 1, **dadurch gekennzeichnet, dass** die Umschaltungsmittel, MC, konfiguriert sind, um
in dem Fall, dass an dem Frequenzblock des zweiten Typs eine Signalisierungsinformation detektiert wird, die eine an dem Benutzer-Endgerät (3-j) ankommende Kommunikation signalisiert, dem Benutzer vorzuschlagen, die ankommende Kommunikation zu empfangen, und
in dem Fall, dass der Benutzer seine Zustimmung erteilt, das Benutzer-Endgerät (3-j) anzuweisen, zum Zwecke der Verwirklichung des Verbindungsaufbauwunsches zu dem Frequenzblock des ersten Typs umzuschalten, um die ankommende Kommunikation an dem Frequenzblock des ersten Typs zu initiieren.

3. Vorrichtung nach einem der Ansprüche 1 bis 2, **dadurch gekennzeichnet, dass** die Umschaltungsmittel, MC, konfiguriert sind, um in dem Fall, dass das Benutzer-Endgerät (3-j) versucht, eine abgehende Kommunikation aufzubauen, das Benutzer-Endgerät (3-j) anzuweisen, zum Zwecke der Verwirklichung des Verbindungsaufbauwunsches zu dem Frequenzblock des ersten Typs umzuschalten, um die abgehende Kommunikation an dem Frequenzblock des ersten Typs zu initiieren.

4. Benutzer-Endgerät (3-j) mit einem Frequenzduplex-Sender/Empfänger, ER2, der mit einem Netz verbunden werden kann, das erlaubt, dem Benutzer einen Dienst bereitzustellen, der keinen Rückkanal benötigt, wobei das Netz ein Frequenzduplex-Netz ist und über mindestens eine für die Übertragung von Datenrahmen spezifizierte Gruppe von Frequenzblöcken eines ersten Frequenzduplex-Typs und über eine Gruppe von Frequenzblöcken eines zweiten Zeitduplex-Typs verfügt, **dadurch gekennzeichnet, dass** das Benutzer-Endgerät eine Steuerungsvorrichtung (D) nach einem der vorstehenden Ansprüche aufweist.

5. Steuerungsverfahren zur Steuerung von Frequenzbändern, die von Benutzer-Endgeräten (3-j) verwendet werden, die mit einem Netz verbunden werden können, das erlaubt, dem Benutzer einen Dienst bereitzustellen, der keinen Rückkanal benötigt, wobei das Netz ein Frequenzduplex-Netz ist und über mindestens eine für die Übertragung von Datenrahmen spezifizierte Gruppe von Frequenzblöcken eines ersten Frequenzduplex-Typs und über eine Gruppe von Frequenzblöcken eines zweiten Zeitduplex-Typs verfügt, wobei das Steuerungsverfahren in einer in dem Benutzer-Endgerät eingebauten Steuerungsvorrichtung durchgeführt wird und aufweist:
i) Analysieren mindestens einer an einem Frequenzblock des ersten Typs von dem Benutzer-Endgerät (3-j) empfangenen Signalisierungsinformation, wobei die Analysemittel konfiguriert sind, um zu detektieren, ob die Signalisierungsinformation die Bereitstellung des Dienstes an einem Frequenzblock des zweiten Typs signalisiert,
**dadurch gekennzeichnet, dass** das Verfahren aufweist:
ii) Anweisen des Benutzer-Endgeräts, um in dem Fall
- einer Detektion von Signalisierungsinformation, die die Bereitstellung des Dienstes an dem Frequenzblock des zweiten Typs signalisiert, und
- einer von dem Benutzer des Benutzer-Endgeräts (3-j) erteilten Zustimmung zum Zugriff auf den Dienst
zu einem Frequenzblock des zweiten Typs umzuschalten, um Datenrahmen des ersten Typs an dem Frequenzblock des zweiten Typs zu empfangen.

6. Verfahren nach Anspruch 5, **dadurch gekennzeichnet, dass** in dem Fall, dass an dem Frequenzblock des zweiten Typs eine Signalisierungsinformation detektiert wird, die eine an dem Benutzer-Endgerät (3-j) ankommende Kommunikation signalisiert, dem Benutzer vorgeschlagen wird, die ankommende Kommunikation zu empfangen, und dass in dem Fall, dass der Benutzer seine Zustimmung erteilt, das Benutzer-Endgerät (3-j) zum Zwecke der Verwirklichung des Verbindungsaufbauwunsches zu dem Frequenzblock des ersten Typs umschaltet, um die ankommende Kommunikation an dem Frequenzblock des ersten Typs zu initiieren.

7. Verfahren nach einem der Ansprüche 5 bis 6, **dadurch gekennzeichnet, dass** in dem Fall, dass das Benutzer-Endgerät (3-j) versucht, eine abgehende Kommunikation über eine Aufwärtsstrecke aufzubauen, das Benutzer-Endgerät (3-j) zum Zwecke der Verwirklichung des Verbindungsaufbauwunsches zu dem Frequenzblock des ersten Typs umschaltet, um die abgehende Kommunikation an dem Frequenzblock des ersten Typs zu initiieren.

8. Verfahren nach einem der Ansprüche 5 bis 7, **dadurch gekennzeichnet, dass** das Netz mittels eines Frequenzblocks des ersten Typs Signalisierungsmeldungen, die Signalisierungsinformationen enthalten, die die Bereitstellung eines Dienstes an einem Frequenzblock des zweiten Typs signalisieren, zu mehreren Benutzer-Endgeräten (3-j) sendet, dann das Netz mittels des Frequenzblocks des zweiten Typs Datenrahmen, die die Daten des Dienstes und Signalisierungsinformationen enthalten, zu den Benutzer-Endgeräten (3-j) sendet.

9. Verfahren nach einem der Ansprüche 5 bis 8, **dadurch gekennzeichnet, dass** der Dienst ein Verteildienst des Typs Multimedia Broadcast Multicast Service, MBMS, ist.

## Claims

1. A device, D, for controlling frequency bands used by a user terminal (3-j) suitable for being connected to a network making it possible to provide the user with a service that does not require a backward channel, said network being a Frequency Duplex (FDD) network, and having at least one set of frequency blocks of a first type of frequency duplexing, dedicated to the transmission of data frames, and one set of frequency blocks of a second type of time duplexing, said controlling device, D, being embedded in said user terminal, the device comprising
i) means for analyzing at least one item of signaling information received by said user terminal on a frequency block of the first type, said means being adapted to detect if said item of signaling information reports the provision of said service on a frequency block of the second type, and
ii) switchover means capable of being activated in order to receive data frames of the first type on the frequency block of the second type if:
- said analyzing means detect the item of signaling information reporting the provision of said service, and
- agreement of the user of said user terminal (3-j) to access said service.

2. The device as claimed in claim 1, **characterized in that** said switchover means (MC) are arranged in order to:
- in the event of detection, on said frequency block of the second type, of an item of signaling information signaling an incoming communication on said user terminal (3-j), propose that said user receive said incoming communication and,
- in the event of said user's agreement, instruct said user terminal (3-j) to switch over to said frequency block of the first type, so that it can make a request to set up a connection in order to initiate said incoming communication on said frequency block of the first type.

3. The device as claimed in one of claims 1 to 2, **characterized in that** said switchover means (MC) are arranged in order to, in the event of an attempt to set up an outgoing communication by said user terminal (3-j), instruct said user terminal (3-j) to switch over to said frequency block of the first type, so that said user terminal (3-j) can make a request to set up a connection in order to initiate said outgoing communication on said frequency block of the first type.

4. A user terminal (3-j), comprising a frequency duplex transceiver (ER2) suitable for connecting to a network making it possible to provide the user with a service not requiring a backward channel, said network being a frequency duplex network, and having at least one set of frequency blocks of a first type of frequency duplexing dedicated to the transmission of data frames, and one set of frequency blocks of a second type time duplexing, **characterized in that** it comprises a control device (D) as claimed in one of the preceding claims.

5. A method of controlling frequency bands used by user terminals (3-j) suitable for being connected to a network making it possible to provide the user with a service that does not require a backward channel, said network being a Frequency Duplex (FDD) network, and having at least one set of frequency blocks of a first type of frequency duplexing, dedicated to the transmission of data frames, and one set of frequency blocks of a second type of time duplexing in a controlling device embedded in said user terminal consisting:
i) of analyzing at least one item of signaling information received by said user terminal on a frequency block of the first type, said means being adapted to detect if said item of signaling information reports the provision of said service on a frequency block of the second type, and
ii) in instructing said user terminal to switch over to a frequency block of the second type to receive data frames of the first type on the frequency block of the second type in case of:
- detection of the item of signaling information reporting the provision of said service on the frequency bloc of the second type, and
- agreement of the user of said user terminal (3-j) to access said service.

6. The method as claimed in claim 5, **characterized in that**, in the event of detection on said frequency block of the second type of an item of signaling information signaling an incoming communication on said user terminal (3-j), it is proposed to said user to receive said incoming communication, and in the event of agreement of said user, said user terminal (3-j) switches over to said frequency block of the first type, in order to be able to make a request to set up a connection in order to initiate said incoming communication on said frequency block of the first type.

7. The method as claimed in one of claims 5 to 6, **characterized in that**, in the event of an attempt to set up an outgoing communication by said user terminal (3-j) on an uplink, said user terminal (3-j) switches over to said frequency block of the first type, in order to be able to make a request to set up a connection in order to initiate said outgoing communication on said frequency block of the first type.

8. The method as claimed in one of claims 5 to 7, **characterized in that** said network transmits to several user terminals (3-j), on a frequency block of the first type, signaling messages containing items of signaling information signaling the provision of a service on a frequency block of the second type, and then said network transmits to said user terminals (3-j) on said frequency block of the second type the data frames containing the data of said service and items of signaling information.

9. The method as claims in one of claims 5 to 8, **characterized in that** said service is a broadcast service of MBMS type.
